(19) Europäisches Patentamt
European Patent Office
Office européen des brevets

(11) **EP 2 101 240 B1**

(12) **EUROPÄISCHE PATENTSCHRIFT**

(45) Veröffentlichungstag und Bekanntmachung des Hinweises auf die Patenterteilung:
**26.06.2013 Patentblatt 2013/26**

(51) Int Cl.:
*F02D 35/00* *(2006.01)* *F02D 41/00* *(2006.01)*

(21) Anmeldenummer: **08004385.4**

(22) Anmeldetag: **10.03.2008**

(54) **Regelorgan für Fluide**

Regulating organ for fluids

Organe de régulation pour liquides

(84) Benannte Vertragsstaaten:
**DE**

(43) Veröffentlichungstag der Anmeldung:
**16.09.2009 Patentblatt 2009/38**

(73) Patentinhaber: **Morgenbesser, Karl**
**88045 Friedrichshafen (DE)**

(72) Erfinder: **Morgenbesser, Karl**
**88045 Friedrichshafen (DE)**

(74) Vertreter: **Finsterwald, Martin**
**Manitz, Finsterwald & Partner GbR**
**Postfach 31 02 20**
**80102 München (DE)**

(56) Entgegenhaltungen:
**US-A- 4 948 332 US-A- 5 765 991**
**US-A- 5 951 240**

**Beschreibung**

Die Erfindung handelt von einem unter Federkraft öffnenden Regelorgan, das von einem Prozessregler angesteuert wird, um Fluid in ein System niedrigeren Drucks abzusteuern, wobei das Regelorgan mit einem einfach wirkenden pneumatischen Stellantrieb und einem Stellungsregler ausgestattet ist, welcher entsprechend einem von einem Prozessregler vorgegebenen Stellsignal Y das Regelorgan verstellt, bis eine Regelabweichung XD = 0 wird.

Derartige Regelorgane werden beispielsweise als Druckentlastungsventile für Fluide in der Prozesstechnik verwendet. Die Fluide können komprimierte Gase sein, welche in ein System mit niedrigerem Druck abgesteuert werden. Ganz typisch sind Pumpverhütungsventile, die im Zusammenwirken mit Turbokompressoren verhindern sollen, dass der Kompressor in einen zerstörerisch wirkenden Pumpzustand gerät. Es kann sich aber auch um Flüssigkeiten handeln, die in ein System mit niedrigerem Druck abgesteuert werden. Bei all diesen Anwendungen wirkt sich nachteilig aus, wenn die ZU-Position bei Ansteuerung erst mit einer erheblichen Reaktionszeit (Totzeit) verlassen wird. In der Vergangenheit wurden daher verschiedene Möglichkeiten aufgezeigt um diese Totzeit kürzer zu gestalten.

So wird in der Patentschrift US 5,951,240 (METHOD AND APPARATUS FOR IMPROVING ANTISURGE CONTROL OF TURBOCOMPRESSORS BY REDUCING CONTROL VALVE RESPONSE TIME) für einen speziellen Fall einer Pumpverhütungsregelung vorgeschlagen, die von der Regelung vorgegebene Ventilstellung mit reduzierter Verzögerung anzufahren, indem der vorhandene Druck im Stellglied durch temporäres Ansteuern eines zusätzlichen, magnetgesteuerten Entlastungsventils zwischen Stellungsregler und Antrieb beschleunigt abgebaut wird. Eine temporäre Ansteuerung des Magnetventils reduziert zwar die konzeptionsbedingte Totzeit, birgt aber die Gefahr, dass das Ventil zunächst stark übersteuert wird, was sich nachteilig für den nachgeschalteten Prozess auswirken kann. Grundsätzlich setzt diese Erfindung voraus, dass ein Schnellentlastungsventil zwischen Stellungsregler und Membrane bzw. Kolben bereits vorhanden ist und das Ventil von einem entsprechend programmierten Pumpverhütungsregler angesteuert wird. Die notwendigen Steuerzeiten können erst bei der Inbetriebnahme durch Fahrversuche ermittelt werden, was aufgrund der Besonderheiten des nachgeschalteten Prozesses oftmals nicht durchführbar ist.

Die Patentschrift DE 10 2005 049 061 B3 (VORRICHTUNG UND VERFAHREN ZUR STELLUNGSREGELUNG EINES PNEUMATISCHEN STELLGERÄTS) beschreibt ein Verfahren zur Reduzierung der Stellzeiten unter Zuhilfenahme von Boostern und/oder Ablassverstärkern, wodurch eine Reduzierung der bisherigen Totzeit erreicht werden kann. Beide Komponenten arbeiten konzeptionsbedingt mit einer Hysterese, welche sich negativ auf das Regelverhalten auswirkt. Für den Anwender vor Ort sind sie mit bis zu drei sich gegenseitig beeinflussenden Komponenten sehr komplex und nicht einfach einzustellen. Eine optimale Einstellung lässt sich meist nur in Verbindung mit praktischen Versuchen in der Anlage realisieren. Oftmals lässt es der Prozess überhaupt nicht zu, dass Versuche zur Optimierung des Ventils gefahren werden. Außerdem bedeutet die vorgeschlagene Ausführung einen beträchtlichen zusätzlichen Investitionsaufwand und einen hohen Zeitaufwand für eine gute Einstellung.

Es ist Aufgabe der Erfindung, die vorab erwähnten Nachteile zu beseitigen und ein kostengünstiges Verfahren bzw. eine Vorrichtung mit hoher Regeldynamik zur Verfügung zu stellen, um den Entlastungsprozess möglichst schnell, d.h. nahezu ohne Totzeit, zu gewährleisten.

Dies geschieht dadurch, dass wenn sich das Regelorgan in einer dicht schließenden Position befindet und die Regelabweichung XD negativ wird, eine zusätzliche in einer Steuerung mit einer Logik programmierte Funktion das Regelorgan unter Ausnutzung der vollen Kapazität des Stellungsreglers in den Bereich bringt, bei dem Absteuern von Fluid einsetzt.

In der Fachliteratur (z.B. MAN GHH, Service Bulletin Nr. 02/95; Schrauben-, Turbomaschinen; Oktober '95) werden mitunter extrem kurze Programmdurchlaufzeiten (z.B. Reaktionszeiten bei Pumpverhütungsreglern) unter 1 Millisekunde empfohlen. Unberücksichtigt bleibt dabei, dass bei einem pneumatisch betätigten Regelorgan selten der Regler das schwächste Glied im Regelkreis ist, sondern der pneumatische Antrieb. Beispielsweise macht es wenig Sinn, einen Regler mit einer Reaktionszeit im Bereich 1 Millisekunde zu favorisieren, wenn gleichzeitig ein herkömmlicher pneumatischer Antrieb eingesetzt wird, bei dem eine Ansprechzeit von 3 Sekunden schon als gut gilt. Ein Vorteil der Erfindung besteht darin, dass diese Schwäche des pneumatischen Antriebs weitgehend beseitigt wird.

Die Erfindung bietet den Vorteil, dass ohne zusätzliche Hardware mit relativ einfachen Steuerungseingriffen eine beträchtliche Reduzierung der Totzeit erreicht wird, was sich bei zahlreichen praktischen Anwendungen als wirtschaftlicher Nutzen erweist. Durch die Reduzierung der Totzeit wird das konzeptionsbedingte Überschwingen beim Erreichen des Sollwertes minimiert und somit ein wesentlich kleinerer Sicherheitsabstand zu kritischen Betriebswerten ermöglicht. Ein typisches Beispiel ist die Pumpverhütungsregelung bei einem Turbokompressor. Ein Überschwingen muss durch entsprechend großen Sicherheitsabstand der Ansprechlinie zur Pumpgrenze berücksichtigt werden. Der Sicherheitsabstand verringert die Größe des Verdichter-Kennfeldes. Bei einem Prozess, bei dem der Verdichter vielfach im Aus- bzw. Umblasebetrieb gefahren wird, ist der Sicherheitsabstand gleichbedeutend mit unwirtschaftlichem Betrieb. Die Erfindung hat hier den Vorteil, dass der Sicherheitsabstand gegenüber herkömmlichen Ventilkonzepten um den Faktor 2 bis 3 ohne Einbuße an Betriebssicherheit verkleinert werden kann.

Ein Beispiel für ein Ventil, das einen Flüssigkeitsstrom freigibt und dann regelt, ist das Abspritzen von überhitztem Dampf. Dieser Zustand wird relevant, wenn bei einer Dampfturbine eine so schnelle Laständerung stattfindet, dass Heißdampf an der Turbine vorbeigeleitet und dieser zum Schutz der nachgeschalteten Komponenten auf Sattdampftemperatur gebracht werden muss.

Weitere vorteilhafte Weiterbildungen der Erfindung sind durch die abhängigen Ansprüche 2 bis 13 gegeben.

Eine erste Möglichkeit besteht darin, die Logik für die zusätzliche Funktion direkt im Stellungsregler des Regelorgans zu realisieren. Durch Integration dieser zusätzlichen Funktion in den Stellungsregler besteht die Möglichkeit, jedes angeschlossene Ventil mit der erfindungsgemäßen Verkürzung der Totzeit zu betreiben. Die Kosten für eine derartige Verbesserung sind unerheblich, da es sich nur um eine geringfügige Programmerweiterung handelt.

Grundsätzlich ist zwischen "überdeckend dichtenden Stellgliedern" und "anpressend dichtenden Stellgliedern" zu unterscheiden.

Stellglieder respektive Ventile, bei denen die Dichtheit durch Überdeckung erzielt wird, sind z.B. Schlitzscheibenventile, Kolbenschieberventile, Kugelventile. Bei Ventilen dieser Art wird der Wirkhub aus der ZU-Position heraus erst nach Durchfahren eines Tothubs bzw. eines für den Tothub gleichbedeutenden Verdrehwinkels erreicht. Der zu durchfahrende Tothub ist notwendig, um in der ZU-Position Dichtheit zu erreichen.

Durch die erfindungsgemäße Reduktion der Totzeit gewinnen bisher unbeachtete Eigenschaften der überdekkend dichtenden Regelorgane an Bedeutung.

Eine besondere Stellung für den zukünftigen Gebrauch als Pumpverhütungsventil in Verbindung mit einer Pumpverhütungsregelung für Turbokompressoren (z.B. erhältlich über die Fa. kmo turbo GmbH, Friedrichshafen) nimmt dabei das Schlitzscheibenventil, auch "Gleitschieberventil" genannt, ein, welches aus der Patentpublikation EP 0140314 B1 (DE 3339441 A1) bekannt ist.

Die hervorragende Dichtheit eines Schlitzscheibenventils wird dadurch erreicht, dass die bewegliche Scheibe bei ausreichender Überdeckung durch den Prozessdruck gegen die feststehende Scheibe gepresst wird. Dies führt dazu, dass das Schlitzscheibenventil konzeptionsbedingt erst die Überdeckung der Scheiben überbrücken muss, um in den Regelbereich zu gelangen, was ohne zusätzliche Funktion mehrere Sekunden in Anspruch nehmen kann. Die Erfindung reduziert diese Verzögerung auf den Bruchteil einer Sekunde indem sie den Weg aus der Überdeckung durch Ausnutzen der vollen Absteuerkapazität des Stellungsreglers schnellstmöglich durchfährt. Erreicht wird dies dadurch, dass dem Stellungsregler ein diskretes Stellsignal vorgegeben wird.

Schlitzscheibenventile werden beispielsweise von der Firma Schubert & Salzer Control Systems GmbH, Bunsenstr. 38, 85053 Ingolstadt in Standard-Nennweiten von 15 bis 200 mm hergestellt. Eine quer zur Strömung feste und eine dazu bewegliche Scheibe haben gleiche schlitzförmige Durchbrüche, die je nach Ventilstellung miteinander fluchten oder überdeckt sind. Der Gesamthub unterteilt sich in einen Wirkhub, bei dem die Ventilöffnung von "voll offen" bis "gerade geschlossen" reicht, und in einen Tothub, bei dem der Bereich von "gerade geschlossen" bis zu der Endstellung "ZU-Position" reicht.

Der immense Vorteil eines Schlitzscheibenventils liegt in einer geringen aufzubringenden Stellkraft und in einem kleinen Hub. Konzeptionsbedingt sind für die Verstellung eines Schlitzscheibenventils lediglich Reibungskräfte zu überwinden, welche erfahrungsgemäß nur etwa 10% der Kräfte betragen, die für ein anpressend dichtendes Ventil erforderlich sind. Die geringe Verstellkraft erfordert für den pneumatischen Stellantrieb nur einen kleinen Durchmesser von Membrane bzw. Kolben. Mehrere Schlitze pro Scheibe und eine Verstellrichtung quer zu den Schlitzen ergeben einen kleinen Verstellhub. Beides zusammen führt zu einem kleinen Luftvolumen im Antrieb in der ZU-Position, für welches gesamthaft der Druck gesenkt werden muss, um unter Federbelastung die Zwischenposition von "gerade geschlossen" zu erreichen. Im Vergleich zu anpressend dichtenden Stellgliedern sind bei Schlitzscheibenventilen kleinere Stellantriebe mit wesentlich kleineren Luftvolumina möglich. Zusammen mit der zusätzlich programmierten Funktion für die Verkürzung der Totzeit ergeben sich extrem kurze Ansprechzeiten, die im Bruchteil einer Sekunde liegen. Für eine Pumpverhütungsregelung bei Turbokompressoren ist für industrielle Anwendungen bereits die Verwendung eines Schlitzscheibenventils im Zusammenwirken mit einem pneumatischen Stellantrieb neu und erfinderisch.

Bei einem Vergleich zwischen einem anpressend dichtenden Sitzkegelventil mit einem Schlitzscheibenventil ergeben sich folgende Erkenntnisse bezüglich Verschleiß: In der Regel werden Pumpverhütungsventile bei einem überkritischen Druckverhältnis betrieben, was dazu führt, dass im engsten Querschnitt Schallgeschwindigkeit auftritt. Die dadurch hervorgerufenen hohen Strömungskräfte bewirken, dass der Ventilkegel beim Sitzkegelventil im Rahmen der Elastizität seiner Aufhängung zu Schwingungen angeregt wird, was zu Verschleiß am Ventilsitz sowie an den Führungsbuchsen führt.

Durch die geradlinige Strömungsführung in einem Schlitzscheibenventil in Verbindung mit der geringen Einbaulänge treffen die Strömungskegel erst außerhalb des Ventilkörpers auf eine seitliche Begrenzung ohne im Ventil selbst Schäden zu verursachen. Darüber hinaus bauen die Stömungskegel benachbarter Schlitze gegenseitig Energie ab, was sich in verminderter Lärmentwicklung auswirkt.

Eine erfindungsgemäße Logik für ein überdeckend dichtendes Stellglied ist so aufgebaut, dass ein Stellsignal Y zwischen 0% und 100% nur für das Durchfahren des Wirkhubes und nicht für den Gesamthub aufgewendet wird. Sobald das Stellsignal Y 100% erreicht ist, wird als zusätzliche Funktion eine Steuerung aktiviert, die das Regelorgan um einen Tothub in eine zum Dichten benötigte Überdeckung, die ZU-Position, fährt. Wenn das Stellsignal Y wieder einen Wert < 100% annimmt, fährt das Regelorgan, ebenfalls gesteuert, um den Tothub zurück. Dies hat den Vorteil, dass die volle Kapazität des Stellantriebs für das Durchfahren des Tothubes verwendet wird.

Stellglieder respektive Ventile, bei denen die Dichtheit mit dem Stellantrieb durch Anpressung erzeugt wird, sind beispielsweise Sitzkegelventile und Regelklappen. Bei diesen muss die geschlossene "ZU-Position" mit einer Stellkraft gegen den Prozessdruck aufrechterhalten werden. Die Folge sind große Durchmesser für Membrane bzw. Kolben. Zusätzlich ist noch eine Dichtkraft, die durch Anpressung erzeugt wird, notwendig, um Dichtheit zu erreichen. Diese Dicht- oder Anpresskraft kann bis zu 50% der maximalen Stellkraft ausmachen. Der Abbau dieser Anpresskraft bringt eine unerwünschte Totzeit mit sich. Mit einer erfindungsgemäßen Logik wird die Totzeit reduziert, indem bei einer negativen Regelabweichung des Stellungsreglers und bei geschlossenem Regelorgan ein stellungsreglerinternes Absteuerorgan unabhängig von der Regelabweichung in einer Form angesteuert wird, dass der Druck p im Stellantrieb vom Stellungsregler mit maximaler Kapazität abgebaut wird, solange bis das Regelorgan die "ZU-Position" verlassen hat. Je nach Aufbau des Stellungsreglers kann das stellungsreglerinterne Absteuerorgan beispielsweise ein elektrisch betätigtes Ventil oder ein Düsen-Prallplatten-System sein.

Eine weitere Möglichkeit besteht darin, die zusätzliche Funktion in einem Prozessregler bzw. einer Steuerung zu programmieren, wobei ein der Position des Regelorgans exakt entsprechendes Signal G im Prozessregler zur Verfügung steht. Dies hat den Vorteil, dass auch bei alten Anlagen das bestehende Regelorgan unverändert bleiben kann, während die Logik für die Verkürzung der Totzeit nicht im Stellungsregler, sondern in einem Prozessregler bzw. in einer Steuerung programmiert wird.

Für ein Regelorgan mit einem überdeckend dichtendem Stellglied wird die Logik im Prozessregler so aufgebaut, dass die Führungsgröße Y für den Stellungsregler aus dem Reglerausgangssignal YA über eine Funktion gebildet wird, wobei für

$$YA < 100\% \text{ gilt: } Y = YA \text{ multipliziert mit YL [\%] und für } YA = 100\% \text{ gilt: } Y = 100\%.$$

In der Kombination mit einem überdeckend dichtenden Regelorgan ist der Übergang zur Überdeckung konstruktiv vorgegeben und damit der zugehörige Einstellparameter YL schon vor der Inbetriebsetzung bekannt und parametriert. Es müssen keine Versuche zum Finden der optimalen Parameter gefahren werden.

Für ein Regelorgan mit einem anpressend dichtenden Stellglied wird die Logik im Prozessregler so aufgebaut, dass, wenn das Regelorgan die ZU-Position verlassen soll, d.h. die Regelabweichung XD negativ wird, das Reglerausgangssignal Y auf einen Wert YC gestellt und der Prozessregler getrackt wird, wobei YC einem Wert entspricht, der aus der Kombination der Art des Regelorgans und den Prozessvorgaben im Zuge der Inbetriebnahme des Stellgliedes ermittelt wird und unter Tracken zu verstehen ist, das Reglersignal auf einen vorgegebenen Wert zu setzen, von welchem aus der normale Regelvorgang fortgesetzt wird.

Eine dritte Möglichkeit besteht darin, die zusätzliche in der Steuerung programmierbare Funktion durch eine Logik im Prozessregler zu verwirklichen, ohne dass ein der Position des Regelorgans exakt entsprechendes Signal G zur Verfügung steht.

Für ein Regelorgan mit einem überdeckend dichtenden Stellglied wird die Logik im Prozessregler so aufgebaut, dass, wenn die Regelabweichung XD einen vordefinierten negativen Wert XDL unterschreitet, das Reglerausgangssignal Y auf den Wert YL gestellt und danach der Prozessregler getrackt wird, wobei YL dem Beginn der Überdeckung entspricht und unter Tracken zu verstehen ist, das Reglersignal auf einen vorgegebenen Wert zu setzen, von welchem aus der normale Regelvorgang fortgesetzt wird. Der Wert YL ist konstruktiv festgelegt und braucht nicht erst durch Versuche ermittelt werden und kann direkt parametriert werden.

Für ein Regelorgan mit anpressend dichtendem Stellglied wird die Logik im Prozessregler so aufgebaut, dass, wenn die Regelabweichung XD einen vordefinierten negativen Wert XDL unterschreitet, das Reglerausgangssignal Y auf den Wert YC gestellt und danach der Prozessregler getrackt wird, wobei YC einem Wert entspricht, der aus der Kombination der Art des Regelorgans und den Prozessvorgaben im Zuge der Inbetriebnahme des Stellgliedes ermittelt wird und unter Tracken zu verstehen ist, das Reglersignal auf einen vorgegebenen Wert zu setzen, von welchem aus der normale Regelvorgang fortgesetzt wird.

Auch bei dieser dritten Möglichkeit besteht wie bei der zweiten der Vorteil, dass das bestehende Regelorgan als "Hardware" unverändert bleiben kann und dass die Verbesserung nachträglich als "Software" im Prozessregler/ Steuerung verwirklicht wird. In der Mehrheit der Anlagen sind die Prozessregler/ Steuerungen als frei programmierbare Steuerungen ausgeführt, die eine solche Ergänzung zulassen. Eine typische frei programmierbare Steuerung für industrielle Anwendungen ist beispielsweise die SIMATIC S7 der Firma Siemens AG, Wittelsbacherplatz 2, 80333 München.

Nicht immer reicht die Kapazität eines einzelnen Regelorgans aus. Es ist daher durchaus möglich überdeckend dichtende Stellglieder und/oder anpressend dichtende Stellglieder in Kaskade oder parallel mit der erfinderischen Verkürzung der Totzeit vom selben Prozessregler anzusteuern.

Im Folgenden wird die Erfindung anhand von Ausführungsbeispielen aufgezeigt. Es zeigen:

Fig. 1a: schematisch einen Turbokompressor mit einer Pumpverhütungsregelung

Fig. 1b: schematisch ein Kennfeld für einen Turbokompressor nach Fig. 1a,

Fig. 2a: schematisch in Abhängigkeit von der Zeit das Regelverhalten eines anpressend dichtendes Regelorgans aus dem Stand der Technik,

Fig. 2b: schematisch eine Ventilcharakteristik für ein anpressend dichtendes Regelorgan, beispielsweise ein Sitzkegelventil nach Fig. 2a,

Fig. 3a: schematisch in Abhängigkeit von der Zeit das Regelverhalten eines anpressend dichtenden Regelorgans mit erfindungsgemäßer Totzeitverkürzung,

Fig. 3b: schematisch eine Logik zum Beispiel in Fig. 3a,

Fig. 4a: schematisch in Abhängigkeit von der Zeit das Regelverhalten eines anpressend dichtenden Regelorgans mit erfindungsgemäßer Totzeitverkürzung ohne exaktes Rückführungssignal G,

Fig. 4b: schematisch eine Logik zum Beispiel in Fig. 4a,

Fig. 5a: schematisch in Abhängigkeit von der Zeit das Regelverhalten eines Schlitzscheibenventil ohne verkürzte Totzeit,

Fig. 5b: schematisch eine Ventilcharakteristik für ein überdeckend dichtendes Regelorgan, beispielsweise ein Schlitzscheibenventil, ohne verkürzte Totzeit,

Fig. 6a: schematisch in Abhängigkeit von der Zeit das Regelverhalten eines Schlitzscheibenventil mit erfindungsgemäßer Totzeitverkürzung,

Fig. 6b: schematisch eine Ventilcharakteristik für ein Schlitzscheibenventil mit erfindungsgemäßer Totzeitverkürzung,

Fig. 6c: schematisch eine Logik zum Beispiel in Fig. 6a,

Fig. 7a: schematisch in Abhängigkeit von der Zeit das Regelverhalten eines Schlitzscheibenventil mit erfindungsgemäßer Totzeitverkürzung ohne exaktes Rückführungssignal G,

Fig. 7b: schematisch eine Logik zum Beispiel in Fig. 7a,

Fig. 8a: schematisch eine Pumpverhütungsregelung mit einer Kombination aus Schlitzscheibenventil und Regelklappe, und

Fig. 8b: schematisch eine Zuordnung der Ventilansteuerung in Form einer Kaskade für die Kombination nach Fig. 8a

Im Folgenden gelten für gleiche Funktionen und/oder Komponenten gleiche Hinweiszeichen.

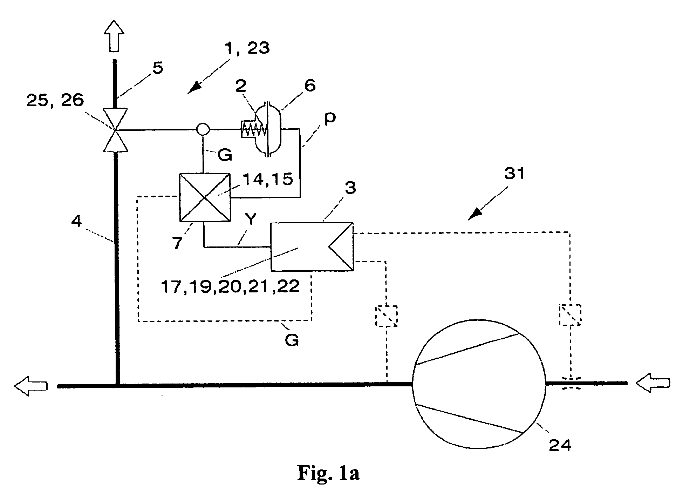

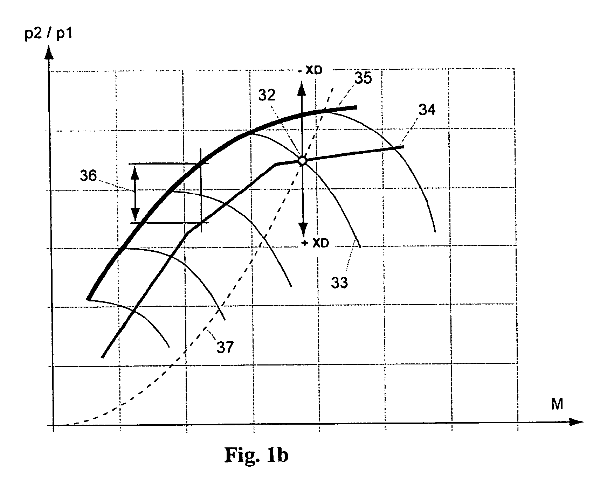

An einem ersten Beispiel wird eine Pumpverhütungsregelung 31 für einen Turbokompressor 24 gezeigt. In Fig. 1a bringt ein Turbokompressor 24 ein gasförmiges Medium 4 von einem Eintrittsdruck p 1 auf einen Austrittsdruck p2. Über ein Regelorgan 1 wird eine als überschüssig erkannte Menge in ein System niedrigeren Drucks 5 abgesteuert gemäß einem vorgegebenen Sollwert Y, der sich aus dem Verdichterkennfeld gemäß Fig. 1b ergibt. Das Regelorgan 1 ist mit einem pneumatischen gegen Federn 2 arbeitenden Antrieb 6 versehen, der über einen Stellungsregler 7 angesteuert wird. Der Stellungsregler 7 erhält von einem Prozessregler 3 ein Stellsignal Y, welches die Sollgröße für die Position des Regelorgans darstellt und gibt einen Steuerluftdruck p auf die Membrane bzw. den Kolben des Antriebs 6. Das Regelorgan 1 kann sowohl ein anpressend dichtendes Stellglied 26 als auch ein überdeckend dichtendes Stellglied 25 sein. Das Stellsignal Y wird im Prozessregler 3 durch einen Vergleich von Fördermenge und Enddruck am Kompressor 24 ermittelt.

Das Verdichterkennfeld in Fig. 1b zeigt über der Fördermenge M das Druckverhältnis p2/p1. Die Pumpgrenze 35 ist die Trennlinie zwischen stabilem und instabilem Betriebsbereich. Der Betriebspunkt 32 ergibt sich aus dem Schnittpunkt der Verdichterkennlinie 33 und der Widerstandskennlinie 37 der Anlage. Um zu verhindern, dass der Betriebspunkt 32 in den instabilen Bereich gerät, wird im Prozessregler 3 eine Ansprechlinie 34 mit einem Sicherheitsabstand 36 eingerichtet. XD ist die Regelabweichung des Pumpverhütungsreglers 3. Ein Betriebspunkt 32 unterhalb der Ansprechlinie 34 bedeutet ein positives XD; ein Betriebspunkt 32 auf der Ansprechlinie 34 bedeutet XD = 0; ein Betriebspunkt 32 oberhalb der Ansprechlinie 34 bedeutet negatives XD. Die Größe der Totzeit 16 hat einen maßgeblichen Einfluss auf die Größe des einzustellenden Sicherheitsabstandes 36. Je kleiner der Sicherheitsabstand 36 gewählt werden kann, desto größer ist das Kennfeld, in welchem die Anlage ohne Ab-/Umblasen betrieben werden kann.

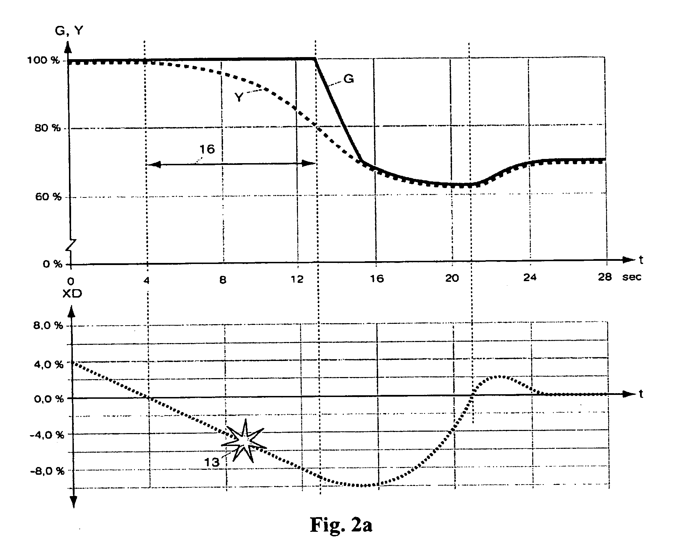

In Fig. 2a ist das Regelverhalten von herkömmlich eingesetzten, anpressend dichtenden Stellgliedern 26 dargestellt. Über der Zeit t sind zum einen Hub G und Stellsignal Y und zum anderen die Regelabweichung XD dargestellt. Bedingt durch die lange Verzögerung 16, bis der Hub G dem Stellsignal Y folgt, führt der Einschwingvorgang zu einer größten negativen Regelabweichung XD von ca. 10%, d.h. es müsste ein Sicherheitsabstand 36 > 10% eingestellt werden, was für kaum einen Betreiber akzeptabel ist. Wenn der Sicherheitsabstand 36 auf einen üblichen Wert von 5% eingestellt ist, kommt es zu Pumpstößen 13.

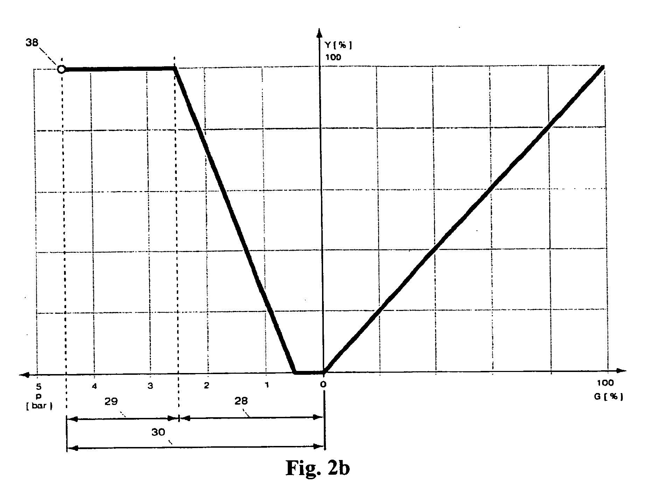

Bei einem anpressend dichtenden Stellglied 26, beispielsweise einem Sitzkegelventil, ergibt sich eine Ventilcharakteristik, wie sie in Fig. 2b gezeigt ist. Im rechten Teil der Grafik ist das Stellsignal Y über dem Hub G aufgetragen, im linken Teil der Grafik der Steuerluftdruck p über dem Stellsignal Y. In der dicht schließenden ZU-Position 38 ist der Steuerluftdruck p oberhalb der Membrane/des Kolbens gleich dem Zuluftdruck 30. Typischerweise werden ca. 60% des Zuluftdruckes 30 als Schließdruck 28 gegen Feder- und Prozessdruck und die verbleibenden 40% als Anpressdruck 29 zum Erreichen der Dichtheit genutzt. Der Anpressdruck 29 muss zunächst abgebaut werden und eine Totzeit 16 entsteht, bevor der Hub G dem Stellsignal Y folgt.

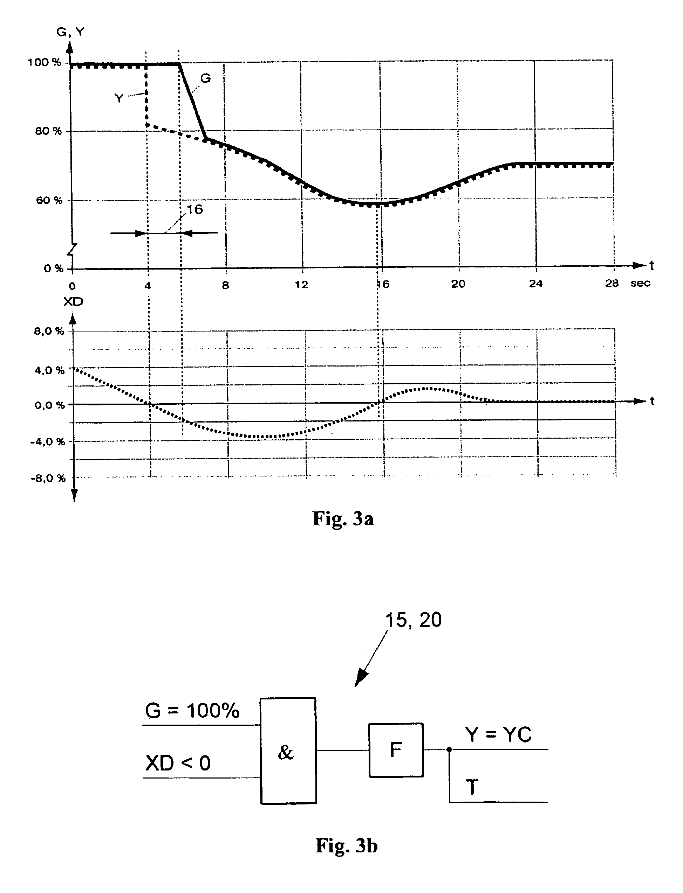

Eine erfindungsgemäße Verkürzung der Totzeit wird in Fig. 3a für ein anpressend dichtendes Regelorgan dargestellt. In diesem Fall wird vorausgesetzt, dass die Steuerung entweder im Stellungsregler 7 oder aber in einem Prozessregler 3 realisiert wird, wobei im Prozessregler 3 ein exaktes Signal für den Hub G zur Verfügung steht. Im Vergleich zu Fig. 2a ergeben sich bei Fig. 3a eine deutlich geringere Totzeit 16 und ein Einschwingvorgang, bei dem die größte negative Regelabweichung XD wesentlich kleiner ausfällt. Der Sicherheitsabstand 36 zwischen Ansprechlinie 34 und Pumpgrenze 35 (Fig 1b) kann entsprechend niedriger eingestellt werden.

In Fig 3b wird eine Logik 15, 20 gezeigt, die sowohl für die Realisierung im Stellungsregler 7 als auch im Prozessregler 3 gilt, wenn letzterem ein exaktes Signal für den Hub G vorliegt. Wenn bei geschlossenem Regelorgan 1 [G = 100%] die Regelabweichung negativ wird [XD < 0], wird über einen Impuls F das Stellsignal Y auf den Wert YC gestellt und der Prozessregler 3 getrackt. Mit diesem Steuereingriff 15, 20 wird der Stellungsregler 7 veranlasst, den Anpressdruck 29 von Anfang an mit voller Kapazität abzusteuern.

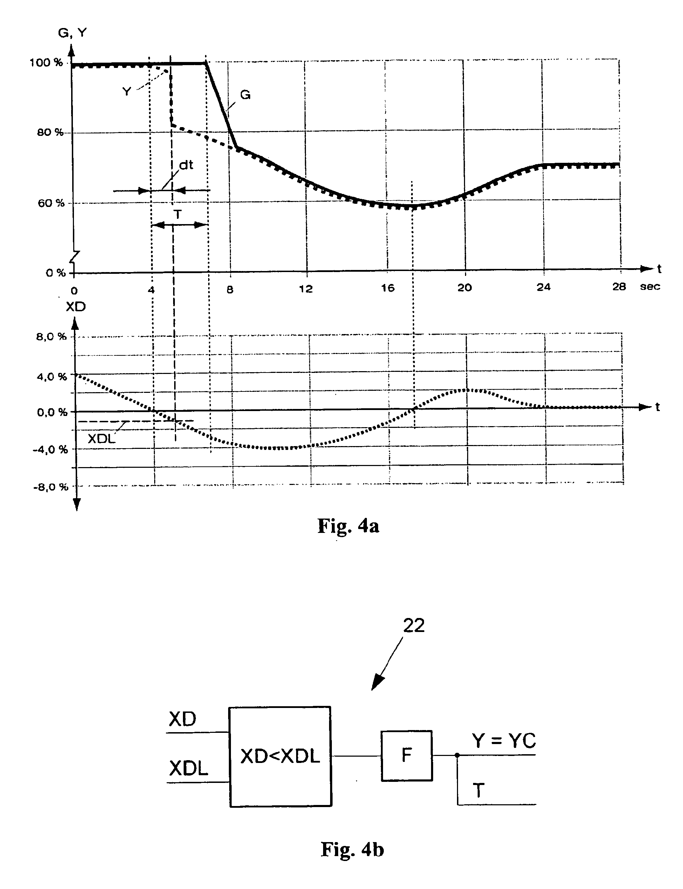

Für den Fall, dass beim Prozessregler 3 kein exaktes Hubsignal G vorliegt, ergibt sich ein Verhalten nach Fig. 4a. Da kein exaktes Hubsignal G vorliegt, wird eine negative Regelabweichung XDL vorgegeben, bei deren Unterschreitung die Logik 22 aktiviert wird, die den Stellungsregler 7 veranlasst, mit maximaler Kapazität abzublasen. Dadurch ergibt sich gegenüber Fig. 3a eine zusätzliche Vergrößerung der Totzeit um einen Betrag dt. Nachdem Y auf YC gesetzt wurde, wird der Prozessregler 3 getrackt.

In Fig. 4b wird eine Logik 22 gezeigt, die im Prozessregler 3 gilt, wenn letzterem kein exaktes Signal für den Hub G vorliegt. Wenn die negative Regelabweichung XD kleiner als ein vordefinierter Wert XDL wird, wird über einen Impuls F das Stellsignal Y auf den Wert YC gestellt und der Prozessregler 3 getrackt. Mit diesem Steuereingriff 22 wird der Stellungsregler 7 veranlasst, den Anpressdruck 29 von Anfang an mit voller Kapazität abzusteuern.

YC wird in beiden Regelcharakteristiken Fig. 3a, 4a bei der Inbetriebnahme des Regelorgans 1 ermittelt. Maßgebend ist zum einen die minimale Regelabweichung des Stellungsreglers 7, ab der dieser mit maximaler Kapazität absteuert, zum anderen individuelle Prozesserfordernisse, bei denen die Vorgabe einer anfänglichen Öffnung vorteilhaft ist.

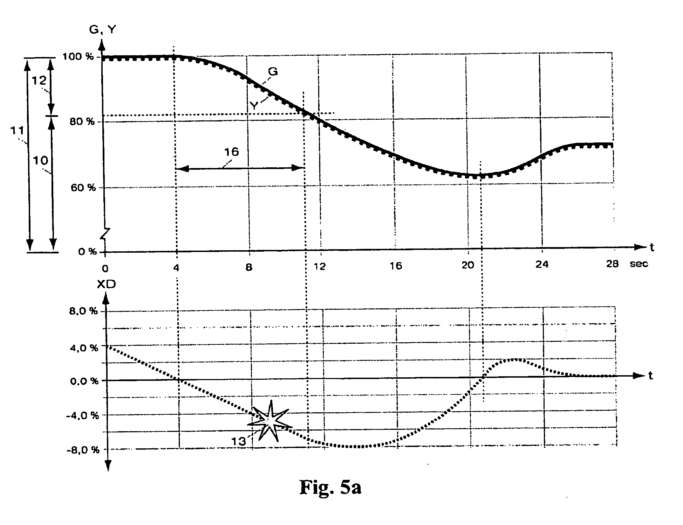

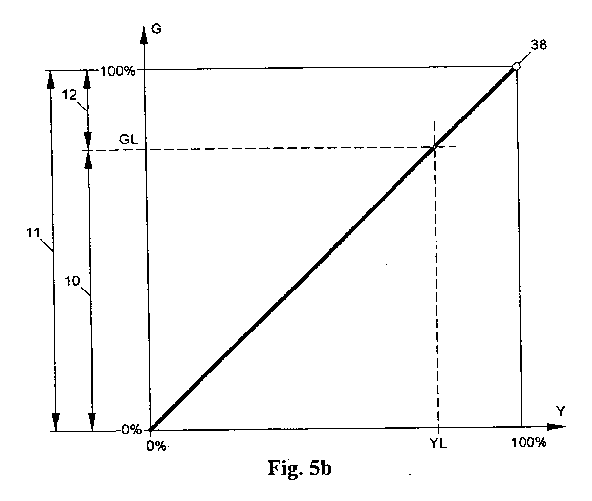

In Beispiel von Fig. 5a und 5b ist das Verhalten eines herkömmlichen, überdeckend dichtenden Stellglieds 25 dargestellt. Die Ventilcharakteristik Fig. 5b zeigt, dass 100% Stellsignal für den Gesamthub 11 verwendet werden, wobei ca. 20% davon alleine für die notwendige Überdeckung [Tothub 12] genutzt werden. Für das Verlassen der ZU-Position 38 ergibt sich dadurch zwangsläufig eine Verzögerung. In Fig. 5a ist das Regelverhalten von herkömmlich eingesetzten, überdeckend dichtenden Stellgliedern 25 dargestellt. Über der Zeit t sind zum einen Hub G und Stellsignal Y und zum anderen die Regelabweichung XD dargestellt. Bedingt durch die lange Verzögerung 16, bis der Hub G in den Wirkbereich 10 des Regelorgans 1 kommt, führt der Einschwingvorgang zu einer größten negativen Regelabweichung XD von ca. 8%, d.h. es müsste ein Sicherheitsabstand 36 > 8% eingestellt werden, was für kaum einen Betreiber akzeptabel ist. Wenn der Sicherheitsabstand 36 auf einen üblichen Wert von 5% eingestellt ist, kommt es zu Pumpstößen 13.

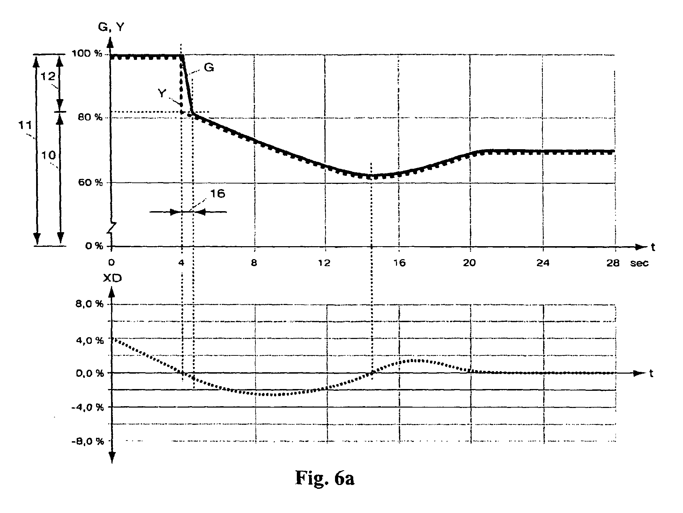

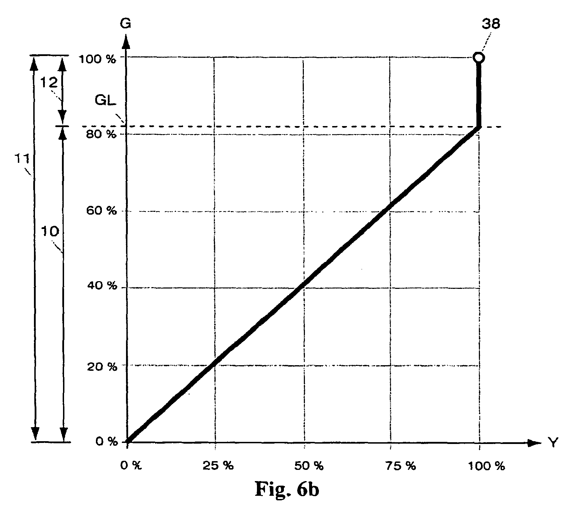

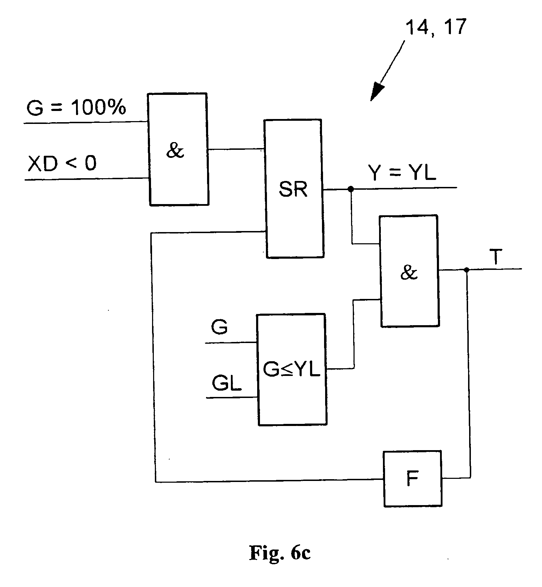

In Fig. 6a, 6b, 6c ist ein überdeckend dichtendes Stellglied 25 am Beispiel eines Schlitzscheibenventils 8 mit einer erfindungsgemäßen Totzeitverkürzung dargestellt. Im Gegensatz zur Ventilcharakteristik in Fig. 5b werden in Fig 6b 100% vom Stellsignal Y für das Durchfahren des Wirkhubs 10 aufgebracht, während der Tothub 12 gesteuert durchfahren wird. Ein Beispiel für den Aufbau einer zugehörigen Logik (14, 17) ist in Fig. 6c gezeigt, die sowohl für die Realisierung im Stellungsregler 7 als auch im Prozessregler 3 gilt, wenn letzterem ein exaktes Signal für den Hub G vorliegt. Wenn bei geschlossenem Regelorgan 1 [G = 100%] die Regelabweichung negativ wird [XD < 0], wird Y auf den Wert YL gestellt. Sobald das Stellglied 25 soweit geöffnet hat, dass G < YL wird, wird der Prozessregler getrackt und das erzwungene Stellsignal aufgehoben. In Fig. 6c wird das Aufheben des erzwungenen Signals über ein bistabiles Kippglied SR (Flip-Flop) erreicht. Mit dieser Variante eines Schlitzscheibenventils 8 ergibt sich eine besonders günstige Ausführung, die zu einem äußerst geringen Überschwingen der negativen Regelabweichung XD führt und zum anderen für den Sicherheitsabstand 36 Einstellwerte von deutlich < 5% erlaubt.

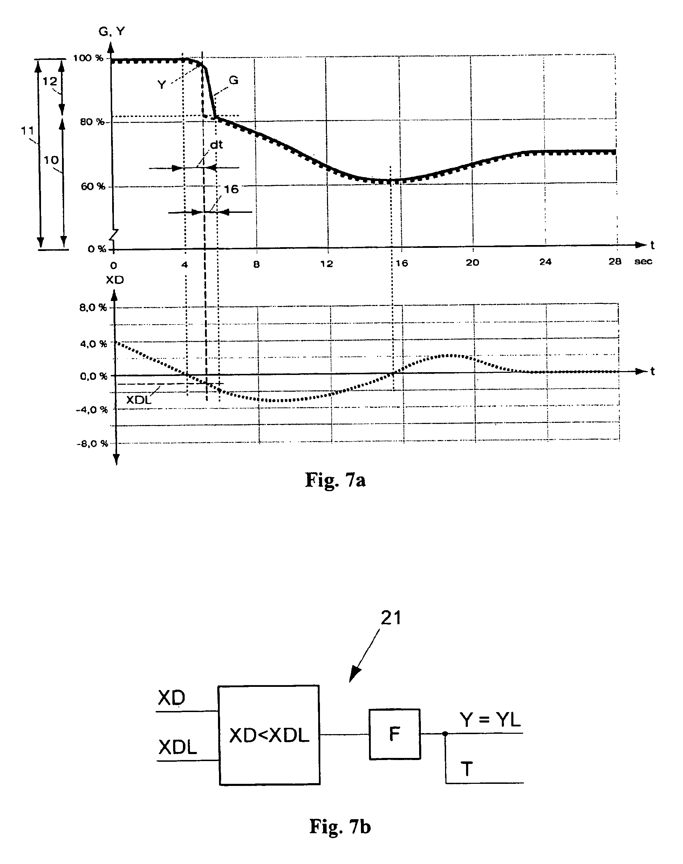

In Fig. 7a und 7b ist ein überdeckend dichtendes Stellglied 25 am Beispiel eines Schlitzscheibenventils 8 mit einer erfindungsgemäßen Totzeitverkürzung dargestellt, wobei kein exaktes Hubsignal G zur Verfügung steht. Da kein exaktes Hubsignal G vorliegt, wird eine negative Regelabweichung XDL vorgegeben, bei deren Unterschreitung die Logik 21 in der Steuerung aktiviert wird, die den Stellungsregler 7 veranlasst, mit maximaler Kapazität abzublasen. Dadurch ergibt sich gegenüber Fig. 6a eine zusätzliche Vergrößerung der Totzeit um einen Betrag dt. Nachdem Y auf YL gesetzt wurde, wird der Prozessregler 3 getrackt.

In Fig. 7b wird eine Logik 21 gezeigt, die im Prozessregler 3 gilt, wenn letzterem kein exaktes Signal für den Hub G vorliegt. Wenn die negative Regelabweichung XD kleiner als ein vordefinierter Wert XDL wird, werden über einen Impuls F das Stellsignal Y auf den Wert YL gestellt und der Prozessregler 3 getrackt. Mit diesem Steuereingriff 21 wird der Stellungsregler 7 veranlasst, den Tothub 13 von Anfang an mit voller Absteuerkapazität zu durchfahren.

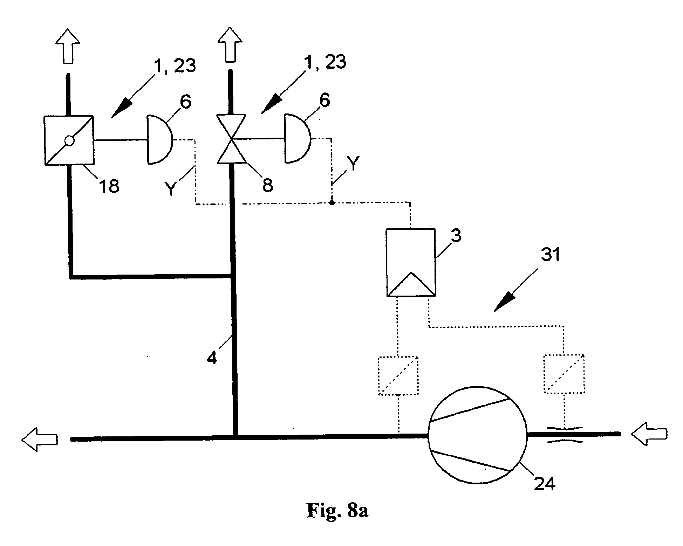

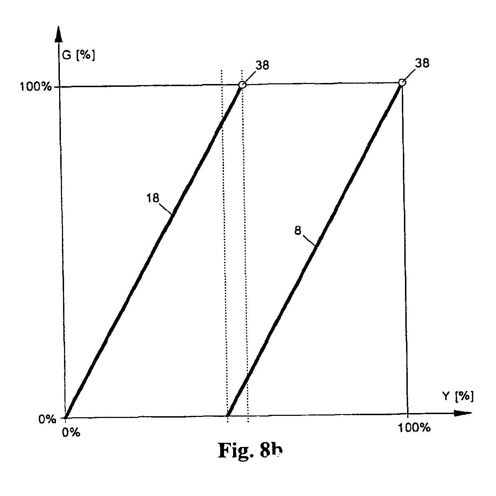

In einem weiteren Beispiel Fig. 8a, 8b ist eine Pumpverhütungsregelung 31 für zwei parallel angeordnete Regelorgane 1 gezeigt, die überdeckend dichtende 25 und/oder auch anpressend dichtende Stellglieder 26 sein können. Bei dieser Konstellation können die vorher beschriebenen erfindungsgemäßen Verkürzungen der Totzeit 16 sowohl im Stellungsregler 7 als auch im Prozessregler 3 verwirklicht sein. Entscheidend für die Güte der Regelung 31 ist, dass das die beiden Regelorgane 1 von einem gemeinsamen Prozessregler 3 in Form einer Kaskade angesteuert werden, wobei das am schnellsten ansprechende Regelorgan 1, hier das Schlitzscheibenventil 8, aus der ZU-Position 38 als erstes angesteuert wird. In der Fig. 8b wird für den Hub G und Stellsignal Y beim Öffnen am Übergang vom ersten Regelorgan 1, Schlitzscheibenventil 8, zum zweiten Regelorgan 1, hier eine Regelklappe 18, eine Überlappung dargestellt, die sich generell als vorteilhaft für einen fließenden Übergang erwiesen hat. Beim Schließen gilt dies entsprechend.

**Bezugszeichenliste:**

| | |
|---|---|
| 1 | Regelorgan |
| 2 | Feder |
| 3 | Prozessregler |
| 4 | Fluid |
| 5 | System niedrigeren Drucks |
| 6 | pneum. Antrieb |
| 7 | Stellungsregler |
| 8 | Schlitzscheibenventil |
| 10 | Wirkhub |
| 11 | Gesamthub |
| 12 | Tothub |
| 13 | Pumpstoß |
| 14 | Logik, Steuerung, im Stellungsregler (7) bei überdeckend dichten dem Stellglied (26) |
| 15 | Logik, im Stellungsregler (7) bei anpressend dichtendem Stellglied (26) |
| 16 | Totzeit |
| 17 | Logik, Prozessregler (3) bei überdeckend dichtendem Stellglied (26) mit exaktem Hubsignal G |
| 18 | Regelklappe |
| 19 | Funktion |
| 20 | Logik, Prozessregler (3) bei anpressend dichtendem Stellglied (26) mit exaktem Hubsignal G |
| 21 | Logik, Prozessregler (3) bei überdeckend dichtendem Stellglied (26) ohne exaktes Hubsignal G |
| 22 | Logik, Prozessregler (3) bei anpressend dichtendem Stellglied (26) ohne exaktes Hubsignal G |
| 23 | Pumpverhütungsventil |
| 24 | Turbokompressor |
| 25 | überdeckend dichtendes Stellglied |
| 26 | anpressend dichtendes Stellglied |
| 28 | Schließdruck |

| 29 | Anpressdruck |
|---|---|
| 30 | Zuluftdruck |
| 31 | Pumpverhütungsregelung |
| 32 | momentaner Betriebspunkt |
| 33 | Verdichterkennlinie |
| 34 | Ansprechlinie |
| 35 | Pumpgrenze |
| 36 | Sicherheitsabstand |
| 37 | Widerstandskennlinie der Anlage |
| 38 | ZU-Position |
| G | Hub (Regelgrösse Stellungsregler) |
| XD | Regelabweichung |
| Y | Stellsignal |
| YA | Ausgang Prozessregler |
| YL | Stellsignal für Beginn der Überdeckung |
| T | Tracken des Reglers |
| p | Steuerluftdruck |
| XDL | vorgegebene negative Regelabweichung |
| SR | bipolares Kippglied (Flip-Flop) |
| F | Flanke/Impuls |
| YC | bei Inbetriebnahme ermittelter Wert |
| M | Fördermenge |
| p2/p1 | Druckverhältnis |
| dt | Verzögerung |
| GL | Hub bei Beginn der Überdeckung |

**Patentansprüche**

1. Regelorgan (1) unter Federkraft öffnend, angesteuert von einem Prozessregler (3), um Fluid (4) in ein System niedrigeren Drucks (5) abzusteuern, wobei das Regelorgan (1) mit einem einfach wirkenden pneumatischen Stellantrieb (6) und einem Stellungsregler (7) ausgestattet ist, welcher entsprechend einem vom Prozessregler (3) vorgegebenen Stellsignal Y das Regelorgan (1) verstellt, bis eine Regelabweichung XD = 0 ist, **dadurch gekennzeichnet, dass**, wenn sich das Regelorgan (1) in einer dicht schließenden Position befindet und die Regelabweichung XD negativ wird, eine zusätzliche in einer Steuerung mit einer Logik (14, 15, 17, 20, 21, 22) programmierte Funktion (19) das Regelorgan (1) unter Ausnutzung der vollen Kapazität des Stellungsreglers (7) in den Bereich bringt, bei dem Absteuern von Fluid (4) einsetzt.

2. Regelorgan nach Anspruch 1, **dadurch gekennzeichnet, dass** die zusätzliche Funktion durch eine Logik (14) direkt im Stellungsregler (7) realisiert ist.

3. Regelorgan nach Anspruch 2, **dadurch gekennzeichnet, dass** es sich bei dem Regelorgan (1) um ein anpressend dichtendes Stellglied (26) handelt mit einer Logik (15) derart, dass bei geschlossenem Regelorgan (1), d.h. in der ZU-Position, und bei einer negativen Regelabweichung XD im Stellungsregler (7) ein stellungsreglerinternes Absteuerorgan unabhängig von der Regelabweichung XD in einer Form angesteuert wird, dass sich der Druck p im Stellantrieb (6) mit maximaler Kapazität des Stellungsreglers (7) abbaut, solange bis das Regelorgan (1) die ZU-Position verlassen hat.

4. Regelorgan nach Anspruch 2, **dadurch gekennzeichnet, dass** es sich bei dem Regelorgan (1) um ein überdeckend dichtendes Stellglied (25) handelt mit einer Logik (14) derart, dass ein Stellsignal Y zwischen 0% und 100% nur für das Durchfahren eines Wirkhubes (10) und nicht für einen Gesamthub (11) aufgewendet wird und dass, sobald das Stellsignal Y 100% erreicht, als zusätzliche Funktion eine Steuerung (14) aktiviert wird, die das Regelorgan um einen Tothub (12) in eine zum Dichten benötigte Überdeckung fährt und die, wenn das Stellsignal Y wieder einen Wert < 100% annimmt die Überdeckung ebenfalls gesteuert um den Tothub zurückfährt.

5. Regelorgan nach Anspruch 1, **dadurch gekennzeichnet, dass** die zusätzliche Funktion durch eine Logik (17) in einem Prozessregler/Steuerung (3) realisiert ist, wobei ein der Position des Regelorgans (1) exakt entsprechendes Signal G im Prozessregler (3) zur Verfügung steht.

6. Regelorgan nach Anspruch 5, **dadurch gekennzeichnet, dass** es sich bei dem Regelorgan (1) um ein anpressend dichtendes Stellglied (26) handelt und der Prozessregler (3) mit einer Logik (20) versehen ist derart, dass, wenn das Regelorgan die ZU-Position verlassen soll, d.h. die Regelabweichung XD negativ wird, das Reglerausgangssignal Y auf einen Wert YC gestellt und der Prozessregler (3) getrackt wird, wobei YC einem Wert entspricht, der aus der Kombination der Art des Regelorgans (1) und den Prozessvorgaben im Zuge der Inbetriebnahme des Stellgliedes ermittelt wird und unter Tracken T zu verstehen ist, das Prozessreglersignal auf einen vorgegebenen Wert zu setzen, von welchem aus der normale Regelvorgang fortgesetzt wird.

7. Regelorgan nach Anspruch 5, **dadurch gekennzeichnet, dass** es sich bei dem Regelorgan (1) um ein überdeckend dichtendes Stellglied (25) handelt und der Prozessregler (3) mit einer Logik (17) versehen ist derart, dass das Stellsignal Y für den Stellungsregler (7) aus dem Reglerausgangssignal YA über eine Funktion (19) gebildet wird, wobei für
YA < 100% gilt: Y = YA x YL [%] und für YA = 100% gilt: Y = 100%.

8. Regelorgan nach Anspruch 1, **dadurch gekennzeichnet, dass** die zusätzliche Funktion durch eine Logik in einem Prozessregler (3) realisiert ist, wobei aber kein der Position des Regelorgans (1) exakt entsprechendes Signal G zur Verfügung steht.

9. Regelorgan nach Anspruch 8, **dadurch gekennzeichnet, dass** es sich bei dem Regelorgan (1) um ein anpressend dichtendes Stellglied (26) handelt und der Prozessregler (3) mit einer Logik (22) versehen ist derart, dass wenn die Regelabweichung XD einen vordefinierten negativen Wert XDL unterschreitet, das Reglerausgangssignal Y auf den Wert YC gestellt und danach der Prozessregler getrackt wird, wobei YC einem Wert entspricht, der aus der Kombination der Art des Regelorgans (1) und den Prozessvorgaben im Zuge der Inbetriebnahme des Stellgliedes ermittelt wird und unter Tracken T zu verstehen ist, das Prozessreglersignal auf einen vorgegebenen Wert zu setzen, von welchem aus sich der normale Regelvorgang fortsetzt.

10. Regelorgan nach Anspruch 8, **dadurch gekennzeichnet, dass** es sich bei dem Regelorgan (1) um ein überdeckend dichtendes Stellglied (25) handelt und der Prozessregler (3) mit einer Logik (21) versehen ist derart, dass wenn die Regelabweichung XD einen vordefinierten negativen Wert XDL unterschreitet, das Reglerausgangssignal Y auf den Wert YL gestellt und danach der Prozessregler (3) getrackt wird, wobei YL dem Beginn der Überdeckung entspricht und unter Tracken zu verstehen ist, das Prozessreglersignal auf einen vorgegebenen Wert zu setzen, von welchem aus sich der normale Regelvorgang fortsetzt.

11. Regelorgan nach einem der Ansprüche 1 bis 10, **dadurch gekennzeichnet, dass** es als Pumpverhütungsventil (23) im Zusammenwirken mit einem Turbokompressor (24) eingesetzt ist.

12. Anlage mit mehreren Regelorganen (1) nach einem der vorangehenden Ansprüche, **dadurch gekennzeichnet, dass** überdeckend dichtende Stellglieder (25) und/oder anpressend dichtende Stellglieder (26) entweder in Kaskade oder parallel vom selben Prozessregler angesteuert sind.

13. Turbokompressor mit einer Pumpverhütungsregelung unter Einsatz von Regelorganen (1) nach einem der Ansprüche 1 bis 12.

**Claims**

1. A regulating member (1) opening under spring force and controlled by a process regulator (3) to terminate fluid (4) in a system of lower pressure (5), wherein the regulating member (1) is equipped with a simply acting pneumatic actuating drive (6) and with a position regulator (7) which adjusts the regulating member (1) in accordance with an adjustment signal Y predefined by the process regulator (3) until a regulation deviation XD = 0, **characterised in that**, when the regulating member (1) is located in a tightly closing position and the regulation deviation XD becomes negative, an additional function (19) programmed in a control having a logic (14, 15, 17, 20, 21, 22) moves the regulating member (1) into the range at which termination of fluid (4) begins while utilising the full capacity of the adjustment regulator (7).

2. A regulating member in accordance with claim 1, **characterised in that** the additional function is implemented directly in the position regulator (7) by a logic (4).

3. A regulating member in accordance with claim 2, **characterised in that** the regulating member (1) is an actuator (26) which seals with a pressing contact and has a logic (15) such that, when the regulating member (1) is closed, i.e. in the OFF position, and when a regulation deviation XD in the position regulator (7) is negative, a termination member internal to the position regulator is controlled independently of the regulation deviation XD in a form such that the pressure p in the actuating drive (6) degrades at a maximum capacity of the position regulator (7) for so long until the regulating member (1) has left the OFF position.

4. A regulating member in accordance with claim 2, **characterised in that** the regulating member (1) is an actuator (25) which seals in a covering manner and has a logic (14) such that an adjustment signal Y between 0% and 100% is used only for the travelling through of an effective stroke (10) and not for a total stroke (11); and **in that**, as soon as the adjustment signal Y reaches 100%, a control (14) is activated as an additional function which moves the regulating member by a dead stroke (12) into a cover position required for sealing and which, when the adjustment signal Y again adopts a value < 100%, moves the cover position back by the dead stroke in a likewise controlled manner.

5. A regulating member in accordance with claim 1, **characterised in that** the additional function is implemented by a logic (17) in a process regulator/control (3), with a signal G corresponding exactly to the position of the regulating member (1) being available in the process regulator (3).

6. A regulating member in accordance with claim 5, **characterised in that** the regulating member (1) is an actuator (26) which seals with a pressing contact and the process regulator (3) is provided with a logic (20) such that, if the regulating member should leave the OFF position, i.e. if the regulation deviation XD becomes negative, the regulator output signal Y is set to a value YC and the process regulator (3) is tracked, with YC corresponding to a value which is determined from the combination of the type of regulating member (1) and the process definitions as part of the putting into operation of the actuator and tracking T is to be understood such that the process regulator signal is set to a predefined value from which the normal regulating procedure is continued.

7. A regulating member in accordance with claim 5, **characterised in that** the regulating member (1) is an actuator (25) sealing in a covering manner and the process regulator (3) is provided with a logic (17) such that the adjustment signal Y for the adjustment regulator (7) is formed from the regulator output signal YA via a function (19), where when YA < 100%: Y = YA x YL [%] and when YA = 100%: Y = 100%

8. A regulating member in accordance with claim 1, **characterised in that** the additional function is implemented by a logic in a process regulator (3), with, however, no signal G corresponding exactly to the position of the regulating member (1) being provided.

9. A regulating member in accordance with claim 8, **characterised in that** the regulating member (1) is an actuator (26) which seals with a pressing contact and the process regulator (3) is provided with a logic (22) such that, when the regulation deviation XD falls below a predefined negative value XDL the regulator output signal Y is set to the value YC and the process regulator (3) is then tracked, with YC corresponding to a value which is determined from the combination of the type of regulating member (1) and the process definitions as part of the putting into operation of the actuator and tracking T is to be understood such that the process regulator signal is set to a predefined value from which the normal regulating procedure is continued.

10. A regulating member in accordance with claim 8, **characterised in that** the regulating member (1) is an actuator (25) which seals in a covering manner and the process regulator (3) is provided with a logic (21) such that, when the regulation deviation XD falls below a predefined negative value XDL, the regulator output signal Y is set to the value YL and the process regulator (3) is then tracked, with YL corresponding to the start of the covering and tracking to be understood such that the process regulator signal is set to a predefined value from which the normal regulating procedure is continued.

11. A regulating member in accordance with any one of the claims 1 to 10, **characterised in that** it is used as a pump prevention valve (23) in interaction with a turbocompressor (24).

12. A plant having a plurality of regulating members (1) in accordance with any one of the preceding claims, **characterised in that** actuators (25) sealing in a covering manner and/or actuators (26) sealing with a pressing contact are controlled either in a cascade or in parallel by the same process regulator.

**13.** A turbocompressor having a pump prevention regulation using regulating members (1) in accordance with any one of the claims 1 to 12.

**Revendications**

**1.** Organe de régulation (1) qui s'ouvre sous la force d'un ressort, piloté par un régulateur de process (3), afin de déverser un fluide (4) vers un système à pression plus faible (5), dans lequel l'organe de régulation (1) est équipé d'un entraînement de positionnement pneumatique (6) à simple effet et d'un régulateur de positionnement (7), lequel déplace l'organe de régulation (1) en correspondance d'un signal de positionnement (Y) imposé par le régulateur de process (3), jusqu'à ce qu'un écart de régulation XD soit égal à 0, **caractérisé en ce que**, quand l'organe de régulation (1) se trouve dans une position de fermeture étanche et que l'écart de régulation XD devient négatif, une fonction additionnelle (19), programmée dans une commande avec une unité logique (14, 15, 17, 20, 21, 22) amène l'organe de régulation (1) en exploitant la capacité totale du régulateur de positionnement (7) jusque dans la région dans laquelle le déversement du fluide (4) intervient.

**2.** Organe de régulation selon la revendication 1, **caractérisé en ce que** la fonction additionnelle est réalisée par une unité logique (14) directement dans le régulateur de positionnement (7).

**3.** Organe de régulation selon la revendication 2, **caractérisé en ce que** l'organe de régulation (1) est un organe de positionnement (26) assurant une étanchéité par pressage, avec une unité logique (15) de telle façon que, lorsque l'organe de régulation (1) est fermé, c'est-à-dire dans la position ZU, un organe de déversement interne au régulateur de positionnement est piloté indépendamment de l'écart de régulation XD sous une forme telle que la pression p dans l'entraînement de positionnement (6) décroît avec une capacité maximale du régulateur de positionnement (7), aussi longtemps jusqu'à ce que l'organe de régulation (1) a quitté la position ZU.

**4.** Organe de régulation selon la revendication 2, **caractérisé en ce que** l'organe de régulation (1) est un organe de positionnement (25) assurant une étanchéité par recouvrement, avec une unité logique (14) de telle façon qu'un signal de positionnement (Y) est employé entre 0 % et 100 % uniquement pour le parcours d'une course de travail (10), et non pas pour une course totale (11), et **en ce que**, dès que le signal de positionnement Y atteint 100 %, une commande (14) est activée à titre de fonction additionnelle, qui déplace l'organe de régulation sur une course morte (12) dans une situation de recouvrement nécessaire pour l'étanchéité, et qui, quand le signal de positionnement Y adopte à nouveau une valeur < 100 %, fait reculer le recouvrement également de façon commandée sur la course morte.

**5.** Organe de régulation selon la revendication 1, **caractérisé en ce que** la fonction additionnelle est réalisée par une unité logique (17) dans un régulateur de process/commande (3), dans lequel un signal G qui correspond exactement à la position de l'organe de régulation (1) est à disposition dans le régulateur de process (3).

**6.** Organe de régulation selon la revendication 5, **caractérisé en ce que** l'organe de régulation (1) est un organe de positionnement (26) qui assure une étanchéité par pressage, et le régulateur de process (3) est doté d'une unité logique (20) de telle façon que lorsque l'organe de régulation doit quitter la position ZU, c'est-à-dire que l'écart de régulation XD devient négatif, le signal de sortie Y du régulateur est mis à une valeur YC et le régulateur de process (3) est soumis à un "tracking" (suivi), dans lequel YC correspond à une valeur qui est déterminée à partir de la combinaison du type de l'organe de régulation (1) et des valeurs imposées au processus au cours de la mise en service de l'organe de positionnement et, sous l'expression "tracking" T, il faut entendre que le signal de régulation de process est mis à une valeur prédéterminée, à partir de laquelle le processus de régulation normale est poursuivi.

**7.** Organe de régulation selon la revendication 5, **caractérisé en ce que** l'organe de régulation (1) est un organe de positionnement (25) assurant une étanchéité par recouvrement, et le régulateur de process (3) est doté d'une unité logique (17) de telle façon que le signal de positionnement Y pour le régulateur de positionnement (7) est formé à partir du signal de sortie du régulateur YA via une fonction (19), de sorte que pour Y < 100 %, la relation Y = YA x YL [%] s'applique et
pour YA = 100 %, la relation Y = 100 % s'applique.

**8.** Organe de régulation selon la revendication 1, **caractérisé en ce que** la fonction additionnelle est réalisée par une unité logique dans un régulateur de process (3), mais dans laquelle aucun signal G correspondant exactement à la position de l'organe de régulation (1) n'est à disposition.

**9.** Organe de régulation selon la revendication 8, **caractérisé en ce que** l'organe de régulation (1) est un organe positionnement (26) assurant une étanchéité par pressage, et le régulateur de process (3) est doté d'une unité logique (22) de telle façon que quand l'écart de régulation XD passe au-dessous d'une valeur négative prédéfinie XDL, le signal de sortie du régulateur Y est mis à la valeur YC, et le régulateur de process est ensuite soumis à un "tracking", dans lequel YC correspond à une valeur qui est déterminée à partir de la combinaison du type de l'organe de régulation (1) et des valeurs imposées par le process au cours de la mise en service de l'organe de positionnement et, on entend par "tracking" T que le signal de régulation de process est mis à une valeur prédéterminée à partir de laquelle le processus de régulation normale est poursuivi.

**10.** Organe de régulation selon la revendication 8, **caractérisé en ce que** l'organe de régulation (1) est un organe de positionnement (25) assurant une étanchéité par recouvrement et le régulateur de process (3) est doté d'une unité logique (21) de telle façon que quand l'écart de régulation XD passe au-dessous d'une valeur négative prédéfinie XDL, le signal de sortie de régulation Y est mis à la valeur YL, et ensuite le régulateur de process (3) est soumis à un "tracking", de sorte que YL correspond au commencement du recouvrement et on entend par "tracking" que le signal du régulateur de process est mis à une valeur prédéterminée à partir de laquelle le processus de régulation normale est poursuivi.

**11.** Organe de régulation selon l'une des revendications 1 à 10, **caractérisé en ce qu'**il est employé à titre de vanne de protection de pompe (23) en coopération avec un turbocompresseur (24).

**12.** Installation comprenant plusieurs organes de régulation (1) selon l'une des revendications précédentes, **caractérisée en ce que** des organes de positionnement (25) assurant une étanchéité par recouvrement et/ou des organes de positionnement (26) assurant une étanchéité par pressage sont pilotés soit en cascade soit parallèlement par le même régulateur de process.

**13.** Turbocompresseur comprenant une régulation de protection de pompe qui emploie des organes de régulation (1) selon l'une des revendications 1 à 12.

**Fig. 1a**

**Fig. 1b**

**Fig. 2a**

**Fig. 2b**

**Fig. 3a**

**Fig. 3b**

**Fig. 4a**

**Fig. 4b**

**Fig. 5a**

**Fig. 5b**

**Fig. 6a**

**Fig. 6b**

14, 17

**Fig. 6c**

Fig. 7a

Fig. 7b

**Fig. 8a**

Fig. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5951240 A
- DE 102005049061 B3
- EP 0140314 B1
- DE 3339441 A1

**In der Beschreibung aufgeführte Nicht-Patentliteratur**

- **MAN GHH.** Service Bulletin Nr. 02/95. *Schrauben-, Turbomaschinen,* Oktober 1995